# EUROPÄISCHE PATENTANMELDUNG

(11) **EP 4 481 260 A1**
(43) Veröffentlichungstag der Anmeldung: **25.12.2024**
(21) Anmeldenummer: 23181051.6
(22) Anmeldetag: 22.06.2023
(51) Int. Cl.: F16P 3/14

(54) **ÜBERWACHUNGSEINRICHTUNG UND VERFAHREN ZUM BETRIEB EINER ÜBERWACHUNGSEINRICHTUNG**

(71) Anmelder: Leuze electronic GmbH + Co. KG, 73277 Owen/Teck (DE)
(72) Erfinder: Eder, Alexander, 86928 Hofstetten (DE)
(74) Vertreter: Ruckh, Rainer Gerhard

(57) **Zusammenfassung**

Die Erfindung betrifft ein Verfahren zum Betrieb einer Überwachungseinrichtung (1) mit Sensormitteln, mittels derer eine Schutzfeldüberwachung durchgeführt wird. Abhängig von Sensorsignalen der Sensormittel wird eine Sicherheitsfunktion ausgelöst. Als Sensormittel sind zwei Flächendistanzsensoren (4) vorhanden, mittels derer dasselbe Schutzfeld (6) überwacht wird. Die Sicherheitsfunktion wird nur dann ausgelöst, wenn mit beiden Flächendistanzsensoren (4) gleichzeitig ein Objekteingriff im Schutzfeld (6) registriert wird.

## Beschreibung

Die Erfindung betrifft eine Überwachungseinrichtung und ein Verfahren zum Betrieb einer Überwachungseinrichtung.

Derartige Überwachungseinrichtungen werden insbesondere zur Gefahrenbereichsüberwachung an gefahrbringenden Anlagen eingesetzt. Ein Gefahrenbereich an einer solchen Anlage wird mit einem optischen Sensor überwacht, der allgemein als scannender Sensor derart ausgebildet ist, dass mit den Lichtstrahlen einer Sende-/Empfangseinheit dieses optischen Sensors periodisch ein Überwachungsbereich, insbesondere der Gefahrenbereich, abgetastet wird. Insbesondere kann der optische Sensor als Flächendistanzsensor, das heißt scannender Distanzsensor ausgebildet sein, mit welchem Positionen von Objekten im Überwachungsbereich bestimmt werden können.

Bei bekannten Überwachungseinrichtungen wird jeweils ein scannender optischer Sensor derart eingesetzt, dass mit diesem eine Objektüberwachung nicht im gesamten Überwachungsbereich, d.h. Gefahrenbereich, sondern nur innerhalb eines vorgegebenen Schutzfelds erfolgt. Das Schutzfeld ist als Parameter im optischen Sensor gespeichert, wobei deren Dimension an den zu überwachenden Gefahrenbereich bestmöglich angepasst wird.

Die Auswertung der mit dem optischen Sensor generierten Messdaten erfolgt im optischen Sensor. Hierzu ist im optischen Sensor eine Auswerteeinheit integriert, die die am Ausgang eines Empfängers der Sende-/Empfangseinheit anstehenden Empfangssignale auswertet. Dabei wird ein binäres Objektfeststellungsignal generiert, dessen Schaltzustände angeben, ob sich innerhalb des Schutzfeldes ein Objekt befindet.

Dieses Objektfeststellungsignal wird an eine Steuerung ausgegeben, die die Anlage steuert. Wird ein Objektfeststellungsignal ausgegeben, das signalisiert, dass kein Objekt im Schutzfeld vorhanden ist, wird der Betrieb der Anlage frei gegeben. Generiert der optische Sensor ein Objektfeststellungsignal mit dem Schaltzustand, der einer Objektdetektion im Schutzfeld entspricht, wird durch dieses Objektfeststellungsignal die Anlage mittels der Steuerung stillgesetzt, um Gefahrenzustände zu vermeiden.

Für den Einsatz im Bereich der Sicherheitstechnik, insbesondere im Bereich des Personenschutzes, weist der optische Sensor, insbesondere der Flächendistanzsensor der Überwachungseinrichtung, einen fehlersicheren Aufbau auf, um die normativen sicherheitstechnischen Anforderungen zu erfüllen. Hierzu weist insbesondere die Auswerteeinheit einen mehrkanaligen Aufbau auf, beispielsweise in Form zweier sich zyklisch überwachender Rechnereinheiten.

Mit der Erfüllung dieser sicherheitstechnischen Anforderungen kann die Verfügbarkeit der Überwachungseinrichtung unnötig eingeschränkt sein. Beispielsweise kann durch umherfliegende Störpartikel, wie Staub, Späne oder dergleichen, kurzfristig vom optischen Sensor ein Objekteingriff im Schutzfeld gemeldet werden, was zur Auslösung der Sicherheitsfunktion führt und damit zu einem unnötigen Stillstand der Anlage. Problematisch hierbei ist, dass kleine Störpartikel, insbesondere am Rand des Schutzfelds durch die optischen Abbildungen im Sensor vergrößert dargestellt werden und so Objekteingriffe vortäuschen können.

Derartige unnötige Stillstände können prinzipiell dadurch vermieden werden, dass für die Generierung des Schaltsignals höhere Integrationszeiten vorgegeben werden, d.h. im optischen Sensor erfolgt eine Mitteilung über eine Vielzahl von Messwerten, um so kurzfristiger Störungen herauszumitteln, so dass diese die Generierung des Schaltsignals nicht mehr beeinflussen.

Damit aber vergrößert sich die Reaktionszeit bei der Generierung des Schaltsignals, was bei vielen Applikationen nicht akzeptabel ist.

Der Erfindung liegt die Aufgabe zugrunde, ein hohes Sicherheitsniveau für eine Überwachungseinrichtung der eingangs genannten Art, bei gleichzeitig hoher Verfügbarkeit, zu realisieren.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft ein Verfahren zum Betrieb einer Überwachungseinrichtung mit Sensormitteln, mittels derer eine Schutzfeldüberwachung durchgeführt wird. Abhängig von Sensorsignalen der Sensormittel wird eine Sicherheitsfunktion ausgelöst. Als Sensormittel sind zwei Flächendistanzsensoren vorhanden, mittels derer dasselbe Schutzfeld überwacht wird. Die Sicherheitsfunktion wird nur dann ausgelöst, wenn mit beiden Flächendistanzsensoren gleichzeitig ein Objekteingriff im Schutzfeld registriert wird.

Die Erfindung betrifft weiterhin ein Verfahren zum Betrieb einer Überwachungseinrichtung.

Mit der erfindungsgemäßen Überwachungseinrichtung wird eine sicherheitsrelevante Überwachungsfunktion realisiert, in dem mit zwei Flächendistanzsensoren simultan ein Schutzfeld überwacht wird, wobei abhängig von Sensorsignalen der Flächendistanzsensoren als sicherheitsrelevantes Ergebnis der Schutzfeldüberwachung eine Sicherheitsfunktion generiert wird.

Wesentlich hierbei ist, dass die Sicherheitsfunktion nur dann generiert wird, wenn mit beiden Flächendistanzsensoren gleichzeitig ein Objekteingriff im Schutzfeld registriert wird. Dadurch wird eine hohe Verfügbarkeit der Überwachungseinrichtung erzielt, da eine Fehlfunktion eines Flächendistanzsensors nicht zur Auslösung der Sicherheitsfunktion führt, da diese Sicherheitsfunktion erst dann generiert wird, wenn beide Flächendistanzsensoren im Schutzfeld einen Objekteingriff registrieren.

Durch die redundante Sensoranordnung mit zwei Flächendistanzsensoren wird bei einer Gewährleistung einer sicheren Überwachungsfunktion ein unnötiges Generieren einer Sicherheitsfunktion vermieden. Dies gilt insbesondere dann, wenn durch Störpartikel, wie umherfliegende Kleinteile, Späne oder dergleichen, die Flächendistanzsensoren einen Objekteingriff melden. Da die Abtastungen des Schutzfelds durch die Flächendistanzsensoren nicht synchron erfolgen ist es sehr unwahrscheinlich, dass beide Flächendistanzsensoren gleichzeitig derartige Störpartikel detektieren. Generell emittiert jeder Flächendistanzsensor Strahlen, die periodisch innerhalb eines Erfassungsbereichs geführt werden. Da die beiden Flächendistanzsensoren hinsichtlich dieser Abtastbewegungen nicht synchronisiert sind, ist die Wahrscheinlichkeit sehr gering, dass die Abtaststrahlen der Flächendistanzsensoren diese Störpartikel gleichzeitig erfassen. Daher detektiert immer nur ein Flächendistanzsensor derartige Störpartikel, jedoch nicht beide Flächendistanzsensoren gleichzeitig, so dass diese Störpartikel nicht zum Auslösen der Sicherheitsfunktion führen.

Anders verhält es sich bei sicherheitskritischen Objekten, wie insbesondere Personen, die einerseits viel größer als Störpartikel sind und die sich andererseits viel langsamer im Schutzfeld bewegen. Diese sicherheitskritischen Objekte werden daher von den Flächendistanzsensoren gleichzeitig erfasst und führen so korrekt zur Auslösung der Sicherheitsfunktion.

Die Überwachungseinrichtung kann somit ohne Erhöhung der Integrationszeiten bei der Objekterfassung Störeffekte derart ausfiltern, dass bei Vorhandensein derartiger Störeffekte nicht beide Flächendistanzsensoren gleichzeitig einen Objekteingriff melden. Dadurch wird ohne Erhöhung der Integrationszeiten eine hohe Verfügbarkeit der erfindungsgemäßen Überwachungseinrichtung erhalten.

Gemäß einer vorteilhaften Ausführungsform wird in jedem Flächendistanzsensor als Ausgangssignal ein binäres Schaltsignal generiert, wobei das binäre Schaltsignal den Schaltzustand EIN einnimmt, wenn kein Objekt im Schutzfeld vorhanden ist. Das binäre Schaltsignal nimmt den Schaltzustand AUS ein, wenn ein Objekt im Schutzfeld vorhanden ist. Die Schaltsignale werden in einer Auswerteschaltung mit einer ODER-Verknüpfung verknüpft.

Dabei löst die Auswerteschaltung die Sicherheitsfunktion aus, wenn beide Schaltsignale den Schaltzustand AUS einnehmen.

Vorteilhaft weist jeder Flächendistanzsensor einen Sicherheitsschaltausgang auf, über welchen das jeweilige Schaltsignal an die Auswerteschaltung ausgegeben wird.

Durch die ODER-Verknüpfung werden die Schaltsignale der Flächendistanzsensoren auf einfache Art logisch verknüpft. Dabei stellt die Auswerteschaltung sicher, dass die Sicherheitsfunktion nur dann ausgelöst wird, wenn beide Flächendistanzsensoren gleichzeitig einen Objekteingriff im Schutzfeld melden.

Die Auswerteschaltung kann prinzipiell in einem der Flächendistanzsensoren integriert sein, wobei dann die Auswerteschaltung über eine Datenverbindung mit dem anderen Flächendistanzsensor verbunden ist.

Vorteilhaft bildet die Auswerteschaltung eine separate Einheit außerhalb der Flächendistanzsensoren und ist mit diesen über Datenverbindungen verbunden.

Zur Erfüllung der normativen Anforderungen im Bereich der Sicherheitstechnik sind die Flächendistanzsensoren als Sicherheitssensoren ausgebildet, die einen fehlersicheren Aufbau aufweisen. Vorteilhaft weist auch die Auswerteschaltung einen fehlersicheren Aufbau auf.

Der fehlersichere Aufbau der als Sicherheitssensoren ausgebildeten Flächendistanzsensoren wird vorteilhaft durch eine redundante Auswerteeinheit zur Auswertung von Sensorsignalen des Flächendistanzsensors realisiert. Insbesondere kann die Auswerteeinheit von zwei sich gegenseitig zyklisch überwachenden Rechnereinheiten gebildet sein. Auch die Sicherheitsschaltausgänge der Flächendistanzsensoren können fehlersicher ausgebildet sein, beispielsweise durch eine zweikanalige Ausführung oder durch eine Fehlerkontrolle mittels Testsignalen, die von der Auswerteeinheit an den jeweiligen Sicherheitsschaltausgang ausgegeben und wieder in die Auswerteeinheit rückgelesen werden. Die rückgelesenen Testsignale werden dann für die Fehlerkontrolle mit vorgegebenen Sollwerten verglichen. Generell können auch sichere Busverbindungen zur Ausbildung von Ausgangsstrukturen vorgesehen sein.

Gemäß einer besonders vorteilhaften Ausgestaltung der Erfindung wird mit den Flächendistanzsensoren ein Gefahrenbereich an einer Anlage überwacht. Die Auswerteschaltung ist dann von einer die Anlage steuernden Sicherheitssteuerung gebildet.

Die Sicherheitssteuerung kann auch eine redundante, mehrkanalige Rechnereinheit aufweisen, wodurch diese fehlersicher ist.

Vorteilhaft wird mit der Sicherheitsfunktion die Anlage stillgesetzt und eine Wiederanlaufsperre ausgelöst.

Die Wiederanlaufsperre verhindert ein unkontrolliertes Wiederanlaufen der Anlage, was zu einer Gefährdung für Personen im Umfeld der Anlage führen könnte.

Gemäß einer besonders vorteilhaften Ausführungsform erfolgt ein automatischer Wiederanlauf, wenn bei ausgelöster Sicherheitsfunktion für ein vorgegebenes Zeitintervall mit wenigstens einem Flächendistanzsensor kein Objekteingriff im Schutzfeld registriert wird.

Dabei ist bei einem automatischen Wiederanlauf die Wiederanlaufsperre aufgehoben.

Durch den automatischen Wiederanlauf werden keine zusätzlichen Hardware-Beschaltungen, die manuell von einem Benutzer betätigt werden müssen, benötigt, um die Wiederanlaufsperre aufzuheben.

Voreilhaft ist ein automatischer Wiederanlauf dadurch initiiert, dass in der Auswerteschaltung registriert wird, dass die Bedingung für das Auslösen der Sicherheitsfunktion nicht mehr erfüllt ist.

Die Auswerteschaltung, insbesondere die Sicherheitssteuerung, löst somit nicht nur die Sicherheitsfunktion aus, wenn die Flächendistanzsensoren gleichzeitig ein Objekt im Schutzfeld erkennen. Vielmehr steuert die Auswerteschaltung auch den automatischen Wiederanlauf abhängig von den Schaltsignalen des Flächendistanzsensors, die über die Sicherheitsschaltausgänge ausgegeben werden. Dabei wird in der Auswerteschaltung gefordert, dass über einen vorgegebenen Zeitraum die Flächendistanzsensoren Schaltsignale generieren, die nicht zum Auslösen einer Sicherheitsfunktion führen würden. Durch diese Überwachung ist sichergestellt, dass über den gesamten Zeitraum kein Gefahrenzustand im Schutzfeld vorliegt, so dass darauf die Auswerteschaltung die Wiederanlaufsperre aufheben kann und den automatischen Wiederanlauf der Anlage freigeben kann.

Auch in diesem Fall ist eine hohe Verfügbarkeit der Überwachungseinrichtung gegeben, da es für einen automatischen Wiederanlauf ausreichend ist, wenn nur ein Flächendistanzsensor ein Schaltsignal mit dem Schaltzustand EIN generiert, d.h. ein freies Schutzfeld meldet. Der andere Flächendistanzsensor kann, insbesondere infolge einer Störung oder infolge der Erkennung eines Störobjekts, ein Schaltsignal mit dem Schaltzustand AUS generieren.

Jeder Flächendistanzsensor kann prinzipiell als Radarsensor oder Ultraschallsensor ausgebildet sein. Vorteilhaft ist jeder Flächendistanzsensor ein optischer Sensor.

Die Funktionsweise der Sensormittel ist vorteilhaft derart, dass mit jedem Flächendistanzsensor innerhalb aufeinander folgender Scans ein flächiger Erfassungsbereich abgetastet wird. Das Schaltsignal wird jeweils am Ende eines Scans abhängig von in diesem Scan erhaltenen Sensorsignalen generiert.

Die Auswertung, ob ein Objekt im Schutzfeld vorhanden ist oder nicht, erfolgt somit immer im Anschluss eines Scans, wobei dann in der Auswerteeinheit die Sensorsignale für diesen Scan ausgewertet werden, um das jeweilige Schaltsignal zu generieren.

Dies definiert auch die Gleichzeitigkeitsbedingung für die Generierung der Sicherheitsfunktion. Die vorzugsweise identischen Flächendistanzsensoren generieren ihr Schaltsignal jeweils am Ende eines Scans. Dabei sind zwangsläufig die Scans der beiden Flächendistanzsensoren zeitlich überlappend. Wird im überlappenden Zeitintervall zweier Scans der Flächendistanzsensor von beiden Flächendistanzsensoren ein Objekteingriff im Schutzfeld festgestellt, wird die Sicherheitsfunktion ausgelöst.

Gemäß einer vorteilhaften Ausführungsform emittiert jeder Flächendistanzsensor Lichtstrahlen in Form von Lichtimpulsen, wobei mittels eines Licht-Laufzeitverfahrens Distanzmessungen durchgeführt werden.

Besonders vorteilhaft sind die Pulsabstände der Lichtstrahlen signifikant größer als gemessene Lichtlaufzeiten bei Detektionen von Objekten im Schutzfeld.

Dadurch werden gegenseitige Beeinflussungen der beiden Flächendistanzsensoren, die zu Fehlerdetektionen führen könnten, besonders sicher vermieden.

Eine gegenseitige Beeinflussung der Flächendistanzsensoren ist bereits deshalb sehr unwahrscheinlich, da die Lichtstrahlen der Flächendistanzsensoren mit hoher Wahrscheinlichkeit in unterschiedlichen Richtungen emittiert werden, so dass auch die Wahrscheinlichkeit, dass die Lichtstrahlen beider Flächendistanzsensoren gleichzeitig auf ein Objekt im Schutzfeld treffen und so die Lichtstrahlen eines Flächendistanzsensors zum anderen Flächendistanzsensor geführt sind und dort eine Fehldetektion verursachen, äußerst gering ist.

Diese Wahrscheinlichkeit wird dadurch noch weiter reduziert, da die Pulsabstände der Lichtstrahlen groß gegenüber den gemessenen Lichtlaufzeiten bei Objektdetektionen im Schutzfeld sind, da somit eine zeitgenaue Fremdeinstrahlung eines Lichtimpuls vom benachbarten Flächendistanzsensors, der zur Verfälschung einer Distanzmessung führen könnte, noch unwahrscheinlicher wird.

Die Erfindung wird im Folgenden anhand der Zeichnungen erläutert. Es zeigen:
- Figur 1:: Ausführungsbeispiel der erfindungsgemäßen Überwachungseinrichtung.
- Figur 2:: Blockschaltbild der Überwachungseinrichtung gemäß Figur 1.
- Figur 3:: Erstes Beispiel eines Flächendistanzsensors für die Überwachungseinrichtung gemäß Figur 1.
- Figur 4:: Zweites Beispiel eines Flächendistanzsensors für die Überwachungseinrichtung gemäß Figur 1.

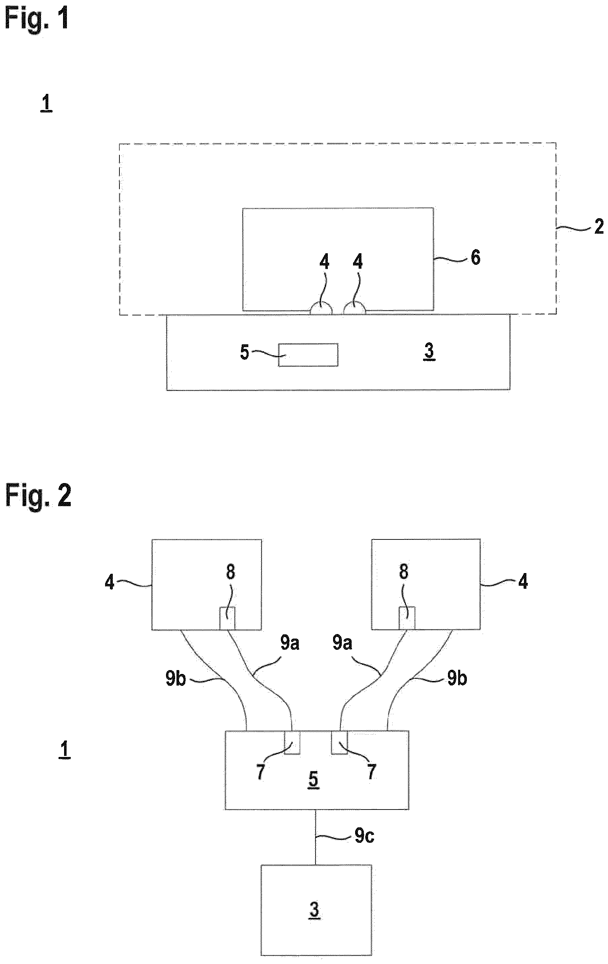

Figur 1 zeigt schematisch ein Ausführungsbeispiel der erfindungsgemäßen Überwachungseinrichtung 1. Die Überwachungseinrichtung 1 dient zur Überwachung eines Gefahrenbereichs 2 an einer Anlage 3. Für diese Überwachung werden als Bestandteile der Überwachungseinrichtung 1 zwei Flächendistanzsensoren 4 eingesetzt. Die Flächendistanzsensoren 4 sind im vorliegenden Fall identisch ausgebildet und in Abstand zueinander, beispielsweise an gegenüberliegenden Ecken an der Anlage 3 montiert, so dass mit den Flächendistanzsensoren 4 das Vorfeld der Anlage 3 überwacht wird. Die Anlage 3 wird von einer Sicherheitssteuerung 5 gesteuert, die einen fehlersicheren Aufbau aufweist. Vorzugsweise wird der fehlersichere Aufbau durch zwei sich zyklisch gegenseitig überwachende Rechnereinheiten realisiert.

Mit den Flächendistanzsensoren 4 wird eine Schutzfeldüberwachung durchgeführt. Erfindungsgemäß wird mit den Flächendistanzsensoren 4 dasselbe Schutzfeld 6 überwacht, das einen Teil des Gefahrenbereichs 2 abdeckt. Generell können in den Flächendistanzsensoren 4 auch mehrere Schutzfelder 6 gespeichert sein, so dass, je nach aktueller Applikationsbedingung, unterschiedliche Schutzfelder 6 aktiviert werden können, wobei jedoch immer mit den Flächendistanzsensoren 4 dasselbe Schutzfeld 6 überwacht wird. Die Auswahl der Schutzfelder 6 kann durch eine Konfiguration mittels der Sicherheitssteuerung 5 durchgeführt werden.

Figur 2 zeigt ein Blockschaltbild der erfindungsgemäßen Überwachungseinrichtung 1. Die Anlage 3 weist zwei Sicherheitsschalteingänge 7 auf. Jeder Flächendistanzsensor 4 weist einen fehlersicheren Sicherheitsschaltausgang 8 auf, über welchen Schaltsignale der Flächendistanzsensoren 4 eingelesen werden. Das Einlesen der Schaltsignale erfolgt jeweils über eine erste Datenleitung 9a, wobei diese Datenleitungen 9a auf die Sicherheitsschalteingänge 7 der Anlage 3 geführt sind.

Die Flächendistanzsensoren 4 sind mit der Sicherheitssteuerung 5 über weitere Datenleitungen 9b verbunden. Mit diesen Datenleitungen 9b wird eine fehlersichere Datenverbindung bereitgestellt, über welche ein bidirektionaler Datenaustausch zwischen der Sicherheitssteuerung 5 und den Flächendistanzsensoren 4 erfolgen kann. Damit können die Flächendistanzsensoren 4 mit der Sicherheitssteuerung 5 konfiguriert, d.h. parametriert werden. Insbesondere kann über die Sicherheitssteuerung 5 das Schutzfeld 6 für die beiden Flächendistanzsensoren 4 vorgegeben werden. Schließlich ist die Sicherheitssteuerung 5 mit der Anlage 3 über eine weitere Datenleitung 9c verbunden. Über diese Datenleitung 9c werden Steuersignale von der Sicherheitssteuerung 5 an die Anlage 3 gesendet.

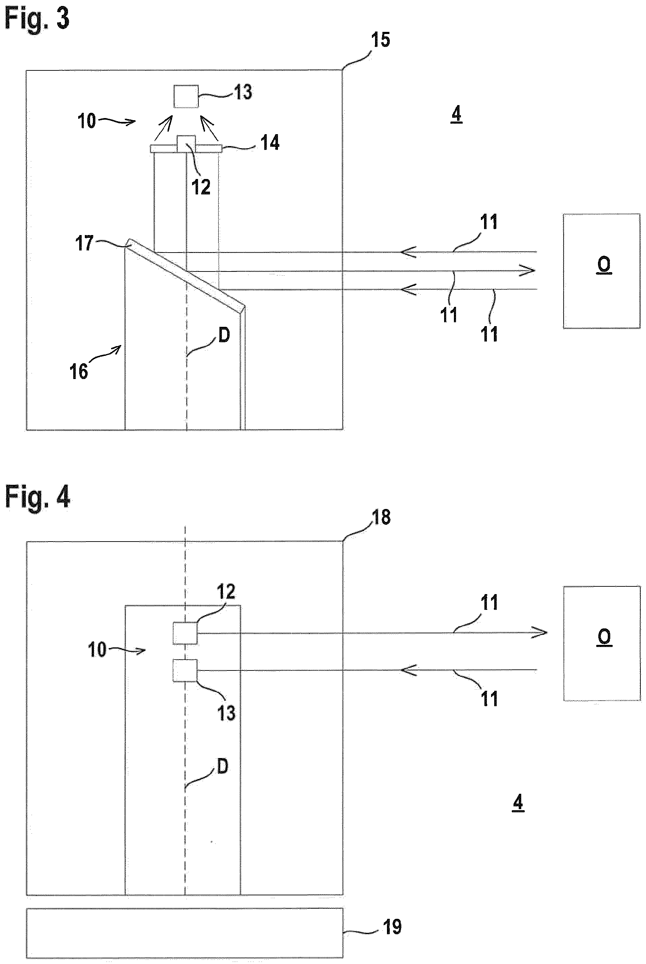

Figur 3 zeigt ein erstes Ausführungsbeispiel des Flächendistanzsensors 4 in Form eines optischen Sensors.

Der Flächendistanzsensor 4 weist eine Sende-/Empfangseinheit 10 mit einem Lichtstrahlen 11 emittierenden Sender 12 und einem Lichtstrahlen 11 empfangenden Empfänger 13 auf. Der Sender 12 ist zum Beispiel von einer Laserdiode gebildet, der Empfänger 13 ist zum Beispiel von einer Photodiode gebildet. Dem Empfänger 13 ist eine Empfangsoptik 14 zugeordnet. Die Sende-/Empfangseinheit 10 ist stationär in einem Gehäuse 15 integriert.

Ebenfalls im Gehäuse 15 ist eine Ablenkeinheit 16 vorgesehen, die einen motorisch getriebenen, um eine Drehachse D drehbaren Umlenkspiegel 17 aufweist. Die vom Sender 12 emittierten Lichtstrahlen 11 und die von einem zu detektierenden Objekt O zurückreflektierten Lichtstrahlen 11 werden über den Umlenkspiegel 17 geführt. Durch die Drehbewegung des Umlenkspiegels 17 werden die Lichtstrahlen 11 periodisch im Überwachungsbereich geführt. Mittels eines Winkelgebers wird die aktuelle Drehstellung des Umlenkspiegels 17 und somit die aktuelle Strahlenrichtung der Lichtstrahlen 11 erfasst.

Im vorliegenden Fall bildet die Sende-/Empfangseinheit 10 einen nach einem Puls-Laufzeit-Verfahren arbeitenden Distanzsensor. Der Sender 12 emittiert daher Folgen von Lichtimpulsen. Zur Distanzbestimmung wird die Lichtlaufzeit jeweils eines Lichtimpuls vom Sender 12 zu einem Objekt O und zurück zum Empfänger 13 ermittelt. Alternativ können Distanzmessungen nach einem Phasenmessverfahren durchgeführt werden.

Figur 4 zeigt eine zweite Ausführungsform des Flächendistanzsensors 4. In diesem Fall ist eine Sende-/Empfangseinheit 10 mit einem Lichtstrahlen 11 emittierenden Sender 12 und einem Lichtstrahlen 11 empfangenden Empfänger 13 in einem rotierenden Messkopf 18 angeordnet. Der um eine Drehachse D drehbare, und auf einem feststehenden Sockel 19 gelagerte Messkopf 18 bewirkt in diesem Fall die periodische Ablenkung der Lichtstrahlen 11 im Überwachungsbereich. Ansonsten entspricht der optische Sensor gemäß Figur 4 der Ausführungsform gemäß Figur 3.

Mit dem Sicherheitssensor 4 in Form des Flächendistanzsensors 4 wird ein zweidimensionaler Erfassungsbereich erfasst. Hierzu wird der Erfassungsbereich periodisch in einzelnen Scans mit den Lichtstrahlen 11 abgetastet. Dementsprechend erfolgt mit dem Sicherheitssensor 4 eine Schutzfeldüberwachung in zweidimensionalen Schutzfeldern 6.

Jeder Flächendistanzsensor 4 der Überwachungseinrichtung 1 bildet einen Sicherheitssensor.

Der als Sicherheitssensor ausgebildete Flächendistanzsensor 4 weist generell eine Auswerteeinheit auf, in der Empfangssignale des Empfängers 13 ausgewertet werden. Dabei erfolgt generell eine Schutzfeldüberwachung derart, dass in der Auswerteeinheit überprüft wird, ob im Schutzfeld 6 ein Objekt O vorhanden ist oder nicht. Abhängig hiervon generiert die Auswerteeinheit als Objektfeststellungssignal ein binäres Schaltsignal dessen Schaltzustände angeben, ob sich ein Objekt O im Schutzfeld 6 befindet oder nicht. Wird im Schutzfeld 6 kein Objekt O registriert, nimmt das Schaltsignal den Schaltzustand EIN an. Wird im Schutzfeld 6 ein Objekt O registriert, nimmt das Schaltsignal den Schaltzustand AUS ein. Das Schaltsignal wird jeweils am Ende eines Scans neu generiert.

Zur Erfüllung der Anforderungen für einen Einsatz des Sicherheitssensors in sicherheitstechnischen Applikationen weist die Auswerteeinheit einen fehlersicheren Aufbau auf. Dies wird beispielsweise dadurch realisiert, dass die Auswerteeinheit aus zwei sich gegenseitig überwachenden Rechnereinheiten besteht.

Erfindungsgemäß wird bei der Überwachungseinrichtung 1 nur dann eine Sicherheitsfunktion ausgelöst, wenn in beiden Flächendistanzsensoren 4 gleichzeitig ein Objekt 0 im Schutzfeld 6 erkannt wird.

Hierzu werden die Schaltsignale der Flächendistanzsensoren 4 allgemein einer Auswerteschaltung, im vorliegenden Fall der Sicherheitssteuerung 5, zugeführt. Dort erfolgt eine ODER-Verknüpfung der Schaltsignale, so dass die Sicherheitsfunktion nur dann generiert wird, wenn die Schaltsignale beider Flächendistanzsensoren 4 gleichzeitig den Schaltzustand AUS einnehmen.

Im vorliegenden Fall besteht die Sicherheitsfunktion darin, dass die Anlage 3 stillgesetzt wird und zudem eine Wiederanlaufsperre ausgelöst wird, die einen unkontrollierten Wiederanlauf der Anlage 3 verhindern. Diese Funktionen übernimmt die Sicherheitssteuerung 5, die die Anlage 3 abhängig von den Schaltsignalen der Flächendistanzsensoren 4 ansteuert.

Weiterhin kann mit der Sicherheitssteuerung 5 auch ein automatischer Wiederanlauf der Anlage 3 durchgeführt werden. Dieser automatische Wiederanlauf erfolgt in der Sicherheitssteuerung 5 selbsttätig dann, wenn diese feststellt, dass für einen vorgegebenen Zeitraum die Bedingung für das Auslösen der Sicherheitsfunktion nicht mehr erfüllt ist.

Hierzu wertet sie Sicherheitssteuerung 5 fortlaufend die von den Flächendistanzsensoren 4 ausgelesenen Schaltsignale aus. Registriert die Sicherheitssteuerung 5, dass für den vorgegebenen Zeitraum wenigstens das Schaltsignal eines Flächendistanzsensors 4 dauerhaft im Schaltzustand EIN verbleibt, wird durch die Sicherheitssteuerung 5 der automatische Wiederanlauf der Anlage 3 ausgelöst und die Wiederanlaufsperre wird aufgehoben.

Da mit zwei Flächendistanzsensoren 4 simultan dasselbe Schutzfeld 6 überwacht wird, wird ein hohes Sicherheitsniveau bei der Schutzfeldüberwachung erhalten.

Zudem wird eine hohe Verfügbarkeit erhalten, da sporadische Störeffekte wie Detektionen, kleiner sich schnell durch das Schutzfeld 6 bewegender Partikel, wie Späne und dergleichen, mit hoher Wahrscheinlichkeit nur bei einem der Flächendistanzsensor 4 eine Änderung des Schaltsignals vom Schaltzustand EIN in den Schaltzustand AUS bewirken. Da jedoch in der Sicherheitssteuerung 5 eine ODER-Verknüpfung der Schaltsignale erfolgt, führt dies nicht zu einer unnötigen Auslösung der Sicherheitsfunktion und damit auch nicht zu einem unnötigen Stillsetzen der Anlage 3.

Weiterhin sind die Flächendistanzsensoren 4 auch unempfindlich gegen gegenseitige Beeinflussungen und dadurch bedingte Fehldetektionen. Da die Scanbewegungen der Lichtstrahlen 11 der beiden Flächendistanzsensoren 4 nicht synchronisiert sind, sind die Richtungen der Lichtstrahlen 11 immer oder nahezu immer unterschiedlich, so dass es sehr unwahrscheinlich ist, dass Lichtstrahlen 11 eines Flächendistanzsensors 4 auf ein Objekt O treffen und von dort zum anderen Flächendistanzsensor 4 so geführt sind, dass diese Lichtstrahlen 11 einer Distanzmessung des anderen Flächendistanzsensors 4 überlagert sind.

Die Unempfindlichkeit gegen gegenseitige Beeinflussungen der beiden Flächendistanzsensoren 4 kann noch weiter dadurch erhöht werden, dass die Pulsabstände der Lichtstrahlen 11 signifikant größer sind als gemessene Lichtlaufzeiten bei Detektionen von Objekten O im Schutzfeld 6.

### Bezugszeichenliste

- (1): Überwachungseinrichtung
- (2): Gefahrenbereich
- (3): Anlage
- (4): Flächendistanzsensor
- (5): Sicherheitssteuerung
- (6): Schutzfeld
- (7): Sicherheitsschalteingang
- (8): Sicherheitsschaltausgang
- (9a-c): Datenleitung
- (10): Sende-/Empfangseinheit
- (11): Lichtstrahl
- (12): Sender
- (13): Empfänger
- (14): Empfangsoptik
- (15): Gehäuse
- (16): Ablenkeinheit
- (17): Umlenkspiegel
- (18): Messkopf
- (19): Sockel

- (D): Drehachse
- (O): Objekt

## Patentansprüche

1. Überwachungseinrichtung (1) mit Sensormitteln, mittels derer eine Schutzfeldüberwachung durchgeführt wird, wobei abhängig von Sensorsignalen der Sensormittel eine Sicherheitsfunktion ausgelöst wird, **dadurch gekennzeichnet, dass** als Sensormittel zwei Flächendistanzsensoren (4) vorhanden sind, mittels derer dasselbe Schutzfeld (6) überwacht wird, und dass die Sicherheitsfunktion nur dann ausgelöst wird, wenn mit beiden Flächendistanzsensoren (4) gleichzeitig ein Objekteingriff im Schutzfeld (6) registriert wird.

2. Überwachungseinrichtung (1) nach Anspruch 1, **dadurch gekennzeichnet, dass** die Flächendistanzsensoren (4) Sicherheitssensoren sind und dass die Sicherheitsfunktion fehlersicher generiert wird.

3. Überwachungseinrichtung (1) nach einem der Ansprüche 1 oder 2, **dadurch gekennzeichnet, dass** in jedem Flächendistanzsensor (4) als Ausgangssignal ein binäres Schaltsignal generiert wird, wobei das binäre Schaltsignal den Schaltzustand EIN einnimmt, wenn kein Objekt (O) im Schutzfeld (6) vorhanden ist, und wobei das binäre Schaltsignal den Schaltzustand AUS einnimmt, wenn ein Objekt (O) im Schutzfeld (6) vorhanden ist, und wobei die Schaltsignale in einer Auswerteschaltung mit einer ODER-Verknüpfung verknüpft werden.

4. Überwachungseinrichtung (1) nach Anspruch 3, **dadurch gekennzeichnet, dass** die Auswerteschaltung die Sicherheitsfunktion auslöst, wenn beide Schaltsignale den Schaltzustand AUS einnehmen.

5. Überwachungseinrichtung (1) nach einem der Ansprüche 3 oder 4, **dadurch gekennzeichnet, dass** jeder Flächendistanzsensor (4) einen Sicherheitsschaltausgang (8) aufweist, über welchen das jeweilige Schaltsignal an die Auswerteschaltung ausgegeben wird.

6. Überwachungseinrichtung (1) nach einem der Ansprüche 3 bis 5, **dadurch gekennzeichnet, dass** mit den Flächendistanzsensoren (4) ein Gefahrenbereich (2) an einer Anlage (3) überwacht wird, und dass die Auswerteschaltung von einer die Anlage (3) steuernden Sicherheitssteuerung (5) gebildet ist.

7. Überwachungseinrichtung (1) nach Anspruch 6, **dadurch gekennzeichnet, dass** mit der Sicherheitsfunktion die Anlage (3) stillgesetzt und eine Wiederanlaufsperre ausgelöst wird.

8. Überwachungseinrichtung (1) nach einem der Ansprüche 1 bis 7, **dadurch gekennzeichnet, dass** ein automatischer Wiederanlauf erfolgt, wenn bei ausgelöster Sicherheitsfunktion für ein vorgegebenes Zeitintervall mit wenigstens einem Flächendistanzsensor (4) kein Objekteingriff im Schutzfeld (6) registriert wird.

9. Überwachungseinrichtung (1) nach einem der Ansprüche 2 und 8, **dadurch gekennzeichnet, dass** ein automatischer Wiederanlauf dadurch initiiert ist, dass in der Auswerteschaltung registriert wird, dass die Bedingung für das Auslösen der Sicherheitsfunktion nicht mehr erfüllt ist.

10. Überwachungseinrichtung (1) nach einem der Ansprüche 7 und 8, **dadurch gekennzeichnet, dass** bei einem automatischen Wiederanlauf die Wiederanlaufsperre aufgehoben ist.

11. Überwachungseinrichtung (1) nach einem der Ansprüche 1 bis 10, **dadurch gekennzeichnet, dass** die Flächendistanzsensoren (4) optische Sensoren sind.

12. Überwachungseinrichtung (1) nach Anspruch 11, **dadurch gekennzeichnet, dass** jeder Flächendistanzsensor (4) Lichtstrahlen (11) in Form von Lichtimpulsen emittiert, wobei mittels eines Licht-Laufzeitverfahrens Distanzmessungen durchgeführt werden.

13. Überwachungseinrichtung (1) nach Anspruch 12, **dadurch gekennzeichnet, dass** die Pulsabstände der Lichtstrahlen (11) signifikant größer sind als gemessene Lichtlaufzeiten bei Detektionen von Objekten (O) im Schutzfeld (6).

14. Überwachungseinrichtung (1) nach einem der Ansprüche 3 bis 13, **dadurch gekennzeichnet, dass** mit jedem Flächendistanzsensor (4) innerhalb aufeinander folgender Scans ein flächiger Erfassungsbereich abgetastet wird, und dass das Schaltsignal jeweils am Ende eines Scans abhängig von in diesem Scan erhaltenen Sensorsignalen generiert wird.

15. Verfahren zum Betrieb einer Überwachungseinrichtung (1) mit Sensormitteln, mittels derer eine Schutzfeldüberwachung durchgeführt wird, wobei abhängig von Sensorsignalen der Sensormittel eine Sicherheitsfunktion ausgelöst wird, **dadurch gekennzeichnet, dass** als Sensormittel zwei Flächendistanzsensoren (4) vorhanden sind, mittels derer dasselbe Schutzfeld (6) überwacht wird, und dass die Sicherheitsfunktion nur dann ausgelöst wird, wenn mit beiden Flächendistanzsensoren (4) gleichzeitig ein Obj ekteingriff im Schutzfeld (6) registriert wird.
